# EUROPÄISCHE PATENTSCHRIFT

(11) **EP 1 422 772 B1**
(45) Veröffentlichungstag und Bekanntmachung des Hinweises auf die Patenterteilung: **20.12.2006**
(21) Anmeldenummer: 02025982.6
(22) Anmeldetag: 21.11.2002
(51) Int. Cl.: H01M 2/38, H01M 10/42

(54) **Akkumulator mit Umwälzvorrichtung zum Homogenisieren des Elektrolyten**
Storage battery with electrolyte circulation
Batterie de stockage à circulation d'electrolyte

(43) Veröffentlichungstag der Anmeldung: 26.05.2004
(73) Patentinhaber: HOPPECKE Batterien GmbH & Co. KG., 59929 Brilon (DE)
(72) Erfinder: Harding, Johannes, 59929 Brilon (DE)
(74) Vertreter: Stenger, Watzke & Ring

(56) Entgegenhaltungen:
- FR-A- 2 600 214
- US-A- 4 565 748
- US-A- 5 665 484
- PATENT ABSTRACTS OF JAPAN Bd. 0062, Nr. 43 (E-145), 2. Dezember 1982 (1982-12-02) & JP 57 141865 A (YUASA DENCHI KK), 2. September 1982 (1982-09-02)
- PATENT ABSTRACTS OF JAPAN Bd. 1999, Nr. 12, 29. Oktober 1999 (1999-10-29) & JP 11 185730 A (NEC ENG LTD), 9. Juli 1999 (1999-07-09)
- PATENT ABSTRACTS OF JAPAN Bd. 0142, Nr. 88 (E-0943), 21. Juni 1990 (1990-06-21) & JP 2 094255 A (AISIN SEIKI CO LTD), 5. April 1990 (1990-04-05)
- PATENT ABSTRACTS OF JAPAN Bd. 0082, Nr. 50 (E-279), 16. November 1984 (1984-11-16) & JP 59 127369 A (MATSUSHITA DENKI SANGYO KK), 23. Juli 1984 (1984-07-23)
- PATENT ABSTRACTS OF JAPAN Bd. 0071, Nr. 70 (E-189), 27. Juli 1983 (1983-07-27) & JP 58 075764 A (YUASA DENCHI KK), 7. Mai 1983 (1983-05-07)

## Beschreibung

Die vorliegende Erfindung betrifft einen Akkumulator mit einer einen Elektrolyten aufweisenden Zelle sowie zwei in der Zelle angeordneten, mit jeweils wenigstens einem Pol elektrisch verbundenen Elektroden, die jeweils zumindest teilweise mit dem Elektrolyten in Kontakt stehen. Die Erfindung betrifft ferner ein Verfahren zum Homogenisieren einer Stoffkonzentration eines Elektrolyten in einem erfindungsgemäßen Akkumulator.

Während eines Ladevorgangs beispielsweise bei einem Blei-Säure-Akkumulator, bei dem als Elektrolyt Schwefelsäure eingesetzt wird, erhöht sich während des Ladevorgangs die Dichte der Schwefelsäure. Durch Einwirken der Gewichtskraft sinkt diese in den unteren Bereich der Akkumulatorzelle. Dieser Vorgang führt zu einer inhomogenen Stoffkonzentration im Elektrolyten und wirkt sich somit auf die Eigenschaften der Akkumulatorzelle aus, insbesondere wenn Bleielektroden sich in Richtung der Gewichtskraft erstrecken und somit an einer Elektrode über deren Erstreckung unterschiedliche Elektrolytkonzentrationen vorliegt.

Aus dem Stand der Technik ist bekannt, durch aufsteigende Gasblasen von am Ende der Ladephase gebildeten Wasserstoff- und Sauerstoffgasen eine Durchmischung des Elektrolyten zu erreichen. Dieser Vorgang der Überladung benötigt jedoch zusätzliche Ladezeit und Ladeenergie. Ferner ist es bekannt, Druckluft in den Elektrolyten einzublasen, um auf diese Weise eine Durchmischung zu erreichen.

Als nachteilig erweist es sich, daß durch die an der Oberfläche des Elektrolyten platzenden Gasblasen eine Säureverschleppung bewirkt wird. Dieser Effekt kann sich bis zur Ladesteckdose und/oder Fahrzeug-Ladegerätestecker erstrecken. Es sind daher diesbezügliche Schutzmaßnahmen vorzusehen, die die entsprechenden Einrichtungen vor den korrosiven Eigenschaften schützen. Die Elektrolytumwälzung durch Druckluft erweist sich ferner bei Einsatz von Rekombinatoren als nachteilig, da diese bei großen Luftmengen ihre Funktion nicht mehr ausführen können.

Die JP 59-198658 A beschreibt eine Umwälzvorrichtung für einen Elektrolyten einer Batteriezelle, wobei benachbart zu mit Polen der Zelle verbundenen Elektrodenplatten die Umwälzvorrichtung innerhalb des Elektrolyten angeordnet ist. Dieser weist ein im Elektrolyten eingetauchtes Rohr auf, in dem ein mit Flügeln besetzter Propeller einer Kreiselpumpe drehbar gelagert ist. Zentrisch weist der Propeller eine Durchgangsöffnung auf, in die fluiddicht eine Ausformung einer mit einem Batteriegehäuse verbundenen Hülse hineinragt. In der Hülse ist eine drehbar gelagerte Welle angeordnet, die mit einem Ende aus dem Zellengehäuse herausragt und an ihrem anderen, in die Ausformung ragenden Ende ein magnetisches Körperelement aufweist. Dieses magnetische Körperelement tritt in magnetische Wechselwirkung mit einem im Propeller angeordneten magnetischen Element. Bei Drehbewegung der Welle wird der Propeller aufgrund der magnetischen Kräfte mitgenommen und zu einer Drehbewegung veranlasst, die zu einer axialen Fluidströmung des Elektrolyten innerhalb der Röhre und damit zu einer Umwälzung des Elektrolyten führt.

Die JP 11-185730 A beschreibt eine innerhalb einer Zelle eines Akkumulators angeordnete Kreiselpumpe, die etwa mittig an einer Seitenwand der Zelle angeordnet ist. Die Pumpe ist mittels eines Elektromotors antreibbar.

Die JP 2-094255 A beschreibt eine Akkumulatorzelle einer Batterie für ein Fahrzeug mit einer Pumpvorrichtung, wobei über eine Rohrleitung der Elektrolyt aus einem oberen Bereich der Zelle angesaugt und in einen unteren Bereich der Zelle gefördert wird. Die Pumpe ist als Kolbenpumpe ausgebildet. Der Kolben wird durch beim Fahren auftretende Trägheitskräfte angetrieben.

Die JP 59-127369 A beschreibt eine Akkumulatorzelle mit einer Elektrolytumwälzung zum Ausgleich von Konzentrationsunterschieden des Elektrolytens bezüglich des oberen und unteren Bereichs der Zelle. Die Pumpe ist außerhalb der Zelle angeordnet und als Kreiselpumpe ausgestaltet. Das Rotorblatt ist magnetisch antreibbar durch ein äußeres magnetisches Drehfeld.

Die JP 58-075764 A offenbart eine Vorrichtung zum Ausgleich von Elektrolytunterschieden innerhalb einer Akkumulatorenzelle. Mittels einer vom Elektromagneten umgebenden Rohrleitung werden Ladungsträger im Elektrolyten von einem unteren Bereich der Zelle in einen oberen Bereich der Zelle gefördert. Die Pumpe weist keine mechanisch beweglichen Teile auf.

Die US 5,665,484 beschreibt eine Vorrichtung zum Umwälzen eines Elektrolyten innerhalb einer Zelle eines Akkumulators. Die Pumpe ist im oberen Bereich der Zelle angeordnet und saugt mittels einer Rohrleitung aus einem unteren Bereich Elektrolyten an und pumpt diesen in einen oberen Bereich über eine weitere Rohrleitung. Die Pumpe wird hydraulisch angetrieben.

Die US 4,565,748 beschreibt eine Vorrichtung zum Umwälzen eines Elektrolyten in einer Akkumulatorzelle, wobei die Pumpe innerhalb der Zelle angeordnet und durch eine Rohrleitung gebildet ist, welche von Magnetspulen umgeben ist. Diese erzeugen durch geeignete Ansteuerung ein Wanderfeld, durch welches Ladungsträger in einer vorgebbaren Weise durch die Rohrleitung förderbar sind. Die Pumpe weist keine mechanisch beweglichen Teile auf.

Die FR 2 600 214 beschreibt eine aufladbare elektrische Batterie mit einer Elektrolytumwälzung. Die Pumpe ist innerhalb der Zelle der Batterie angeordnet. Die Pumpe ist als Kreiselpumpe ausgestaltet.

Es ist wünschenswert, während eines bestimmungsgemäßen Betriebs des Akkumulators eine weitgehend homogene Elektrolykonzentration sicherstellen zu können.

Es ist daher die **Aufgabe** der vorliegenden Erfindung, einen gattungsgemäßen Akkumulator derart weiterzubilden, daß innerhalb der Akkumulatorzelle eine weitgehend homogene Elektrolytkonzentration erreicht werden kann, wobei der Energieaufwand für den Antrieb einer Pumpe reduziert werden soll.

Als **Lösung** der Aufgabe wird mit der Erfindung vorgeschlagen, daß der Akkumulator eine mittels einer Steuereinheit steuerbare Hubkolbenpumpe zum Umwälzen des Elektrolyten aufweist. Mit der vorliegenden Erfindung ist es erstmals möglich, auch in einer vollständig geschlossenen Zelle eines Akkumulators durch Umwälzung des Elektrolyten eine weitgehend homogene Stoffkonzentration im Elektrolyten zu erreichen. Darüber hinaus kann mit der vorliegenden Erfindung auch eine Umwälzung des Elektrolyten während eines bestimmungsgemäßen Betriebs des Akkumulators erreicht werden, so daß eine Verbesserung der charakteristischen Eigenschaften wie Strombelastbarkeit, Spannungsstabilität oder dergleichen erreicht werden kann. Das Mittel zum Umwälzen kann beispielsweise durch eine Pumpe gebildet sein. Die Pumpe kann mit einem elektrischen oder auch mit einem hydraulischen Antrieb gekoppelt sein.

Es wird ferner vorgeschlagen, daß das Mittel zum Umwälzen in der Zelle angeordnet ist. So kann vorteilhaft eine Umwälzung unabhängig von weiteren Zellen des Akkumulators erreicht werden. Daneben kann jedoch auch bei einem Akkumulator mit mehreren Zellen ein gemeinsames Mittel zum Umwälzen vorgesehen sein, wenn beispielsweise ein synchroner Betrieb gewünscht ist. Beispielsweise kann die Pumpe in eine Akkumulator- oder Zellenwand integriert sein. Es kann jedoch auch ein Bauteil sein, welches über bekannte Befestigungsmittel mit der Zellenwand in Verbindung steht.

Darüber hinaus wird vorgeschlagen, daß das Mittel zum Umwälzen eine Verdrängerpumpe, insbesondere eine Membranpumpe aufweist. So kann die Pumpe beispielsweise als eine Hubkolbenpumpe ausgebildet sein. Es wird vorgeschlagen, daß eine Steuereinheit vorgesehen ist, mittels der das Mittel zum Umwälzen steuerbar ist. Vorteilhaft kann erreicht werden, daß Energie für den Antrieb eingespart werden kann. Darüber hinaus kann durch Reduzierung der Betriebsdauer des Antriebs und/oder der Pumpe eine Reduzierung des Verschleißes erreicht werden. Es kann ferner ein Meßelement vorgesehen sein, mit welchem die Homogenität der Stoffkonzentration des Elektrolyten ermittelbar ist, und der Antrieb bedarfsgerecht bei Unterschreiten eines vorgegebenen Grenzwerts aktiviert wird. So kann sichergestellt werden, daß die Verteilung der Stoffkonzentration des Elektrolyten einen vorgegebenen Abweichungsgrad nicht unterschreitet. Eine besonders einfache Ausgestaltung bildet jedoch eine Membranpumpe, die mit bekannten Mitteln an die chemisch korrosive Umgebung angepaßt werden kann. Derartige Pumpen werden bereits vielfach zur Förderung von Säuren eingesetzt. Die Membranpumpe kann aus wenigen Bauteilen bestehen, so daß eine hohe Zuverlässigkeit erreichbar ist.

Als Antrieb für das Mittel zum Umwälzen wird vorgeschlagen, daß das Mittel zum Umwälzen einen mit dem Mittel zum Umwälzen verbundenen, elektrischen Motor aufweist. Ein robuster und kompakter Antrieb kann erreicht werden, wobei zusätzlich der Antrieb vom Akkumulator mit Energie versorgt werden kann. Der Motor ist in diesem Fall vorzugsweise ein Gleichstrommotor, insbesondere ein bürstenloser Gleichstrommotor, der sich durch geringen Wartungsaufwand und große Zuverlässigkeit auszeichnet. Der Motor kann jedoch auch durch einen elektrisch betreibbaren Hubmagneten gebildet sein, dessen Hubkolben beispielsweise über ein Gestänge mit einer Membran einer Membranpumpe in Wirkverbindung steht. Durch mehrmaliges Aktivieren und Deaktivieren des Hubmagneten kann so eine Hin- und Herbewegung erzeugt werden, die entsprechende Bewegungen der Membran bewirkt. Rotierende Teile können somit weitgehend eingespart werden. Demgegenüber steht jedoch ein höherer Steuerungsaufwand im Vergleich zu einem Gleichstrommotor. Daneben kann der Motor jedoch auch durch einen pneumatischen oder einen hydraulischen Motor gebildet sein.

Ferner wird vorgeschlagen, daß die Steuereinheit mit einem Gehäuse des Akkumulators einstückig ausgebildet ist. Ein eigenes Gehäuse für die Steuereinheit sowie Montage und Verkabelungsaufwand können eingespart werden. So kann beispielsweise das Gehäuse des Akkumulators eine für die Aufnahme der Steuereinheit vorgesehene Öffnung aufweisen, die zugleich ein Gehäuse für die Steuereinheit bildet.

Weiterhin wird vorgeschlagen, daß das Mittel zum Umwälzen mit dem Gehäuse des Akkumulators einstückig ausgebildet ist. Montage und Bauteileaufwand können weiter reduziert werden. Darüber hinaus können bereits im Akkumulator vorhandene Bauteile zum Bilden des Mittels zum Umwälzen hinzugezogen werden, beispielsweise indem eine Seitenwand einer Akkumulatorzelle zugleich als Membran einer Membranpumpe verwendbar ist.

Ferner wird mit der Erfindung ein Verfahren zum Homogenisieren einer Stoffkonzentration eines Elektrolyten in einer Zelle eines erfindungsgemäßen Akkumulators vorgeschlagen, wobei der Elektrolyt umgewälzt wird und wobei das Mittel zum Umwälzen in Abhängigkeit von einem Betriebszustand einer mit dem Akkumulator verbindbaren elektrischen Anlage gesteuert wird. So kann beispielsweise bei einem mit einer elektrischen Anlage eines Kraftfahrzeuges verbundenen Akkumulator bei dem Anlaßvorgang des Motors des Kraftfahrzeuges das Mittel zum Umwälzen eingeschaltet werden. Vorteilhaft wird durch die Umwälzung erreicht, daß Bereiche des Elektrolyten mit unterschiedlicher Stoffkonzentration durchmischt werden, wodurch eine Reduzierung von Unterschieden in einer lokalen Stoffkonzentration des Elektrolyten erreicht werden kann.

Darüber hinaus wird vorgeschlagen, daß der Elektrolyt über eine in den Elektrolyten ragende Ansaugöffnung angesaugt, durch Mittel zum Umwälzen beschleunigt wird und über eine Austrittsöffnung des Mittels zum Umwälzen in den Elektrolyten austritt. Vorteilhaft kann eine Zirkulation des Elektrolyten erreicht werden, wodurch bereits eine Entstehung von Bereichen unterschiedlicher Stoffkonzentration im Elektrolyten weitgehend vermieden werden kann.

In einer weiteren Ausgestaltung wird vorgeschlagen, daß der Elektrolyt mittels eines Ansaugkanals von einer vorgebbaren Position angesaugt wird. So kann vorteilhaft das Mittel zum Umwälzen an einer beliebigen Stelle des Akkumulators angeordnet sein, beispielsweise auch außerhalb der Zelle im Akkumulatordeckel, wobei über den Ansaugkanal, beispielsweise einem Ansaugschlauch, der Elektrolyt an einer vorgebbaren Position angesaugt wird. Eine derartige Lösung kann auch zum Nachrüsten an einem bereits bestehenden Akkumulator vorgesehen sein.

Es wird ferner vorgeschlagen, daß der Elektrolyt mittels einem weiteren Kanal an eine vorgebbare Position gefördert wird. In dieser Ausgestaltung kann erreicht werden, daß beispielsweise ein im oberen Bereich der Akkumulatorzelle angeordnetes Mittel zum Umwälzen im Bereich des Elektrolytpegels Elektrolyt mit geringer Stoffkonzentration ansaugt und über den weiteren Kanal an eine vorgebbare Position, in diesem Falle vorzugsweise im unteren Bereich der Akkumulatorzelle fördert. Weiterhin kann bei Vorsehung eines Ansaugkanals sowie des weiteren Kanals erreicht werden, daß das Mittel zum Umwälzen an einer beliebigen Stelle des Akkumulators anordbar ist. Durch Anordnung der Kanäle kann eine gewünschte Umwälzwirkung sichergestellt werden.

In einer weiteren Ausgestaltung wird vorgeschlagen, daß das Mittel zum Umwälzen bedarfsgerecht gesteuert wird. So kann beispielsweise eine Meßeinrichtung vorgesehen sein, mit der Abweichungen der Stoffkonzentration des Elektrolyten an unterschiedlichen lokalen Stellen ermittelt wird und bei Überschreiten eines vorgegebenen Schwellwertes das Mittel zum Umwälzen aktiviert wird. So kann ein hoher Grad an Homogenität der Stoffkonzentration des Elektrolyten mit geringem Energieaufwand erreicht werden.

Weiterhin wird vorgeschlagen, daß das Mittel zum Umwälzen in Abhängigkeit von einer Strombeanspruchung des Akkumulators gesteuert wird. So kann beispielsweise das Mittel zum Umwälzen nur während des Ladens des Akkumulators eingeschaltet sein, es kann darüber hinaus jedoch auch bei einer Hochstromentladung eingeschaltet werden, um beispielsweise die Hochstromcharakteristik des Akkumulators zu verbessern.

Weiterhin wird vorgeschlagen, daß das Mittel zum Umwälzen in Abhängigkeit von vorgebbaren Zeitintervallen gesteuert wird. Vorteilhaft kann erreicht werden, daß ohne zusätzliche Meßmittel eine weitere Reduzierung des Energieaufwands für die Umwälzung erreicht wird.

In einer vorteilhaften Weiterbildung der vorliegenden Erfindung wird vorgeschlagen, daß als Elektrolyt Schwefelsäure verwendet wird. Weiterhin wird vorgeschlagen, daß als Elektroden Bleielektroden verwendet werden.

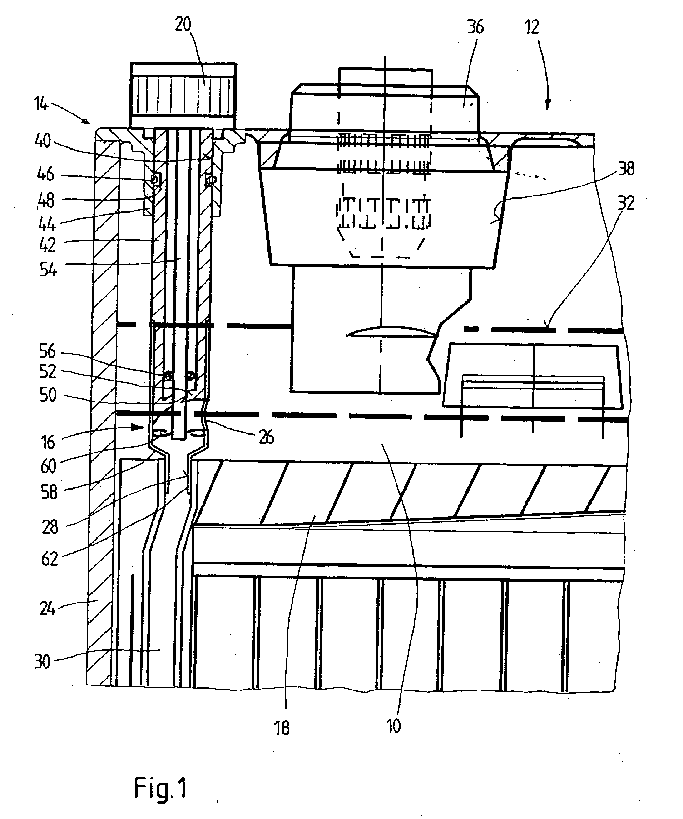

Weitere Vorteile und Merkmale sind der folgenden Beschreibung von Ausführungsbeispielen zu entnehmen. Im wesentlichen gleichbleibende Bauteile sind mit den gleichen Bezugszeichen bezeichnet. Ferner wird bezüglich gleicher Merkmale und Funktionen auf die Beschreibung zum Ausführungsbeispiel in Fig. 1 verwiesen.

Es zeigen:
- Fig. 1: einen Schnitt durch einen Ausschnitt einer Zelle eines Akkumulators mit einer Kreiselpumpe,
- Fig. 2: eine schematische Darstellung der am Gehäuse befestigten Kreiselpumpe in Fig. 1 und
- Fig. 3: eine schematische Darstellung einer erfindungsgemäßen Ausgestaltung mit einer Verdrängerpumpe.

In Fig. 1 ist eine Schnittansicht durch eine Zelle 12 eines Akkumulators 14 dargestellt, der bis zu einem Pegel 32 mit einem Elektrolyten 10 befüllt ist. In der Zelle 12 sind Elektroden 18 angeordnet, die jeweils mit nicht näher dargestellten Polen des Akkumulators 14 elektrisch in Wirkverbindung und mit dem Elektrolyten 10 in Kontakt stehen. Ein Gehäuse 24 des Akkumulators 14 weist eine Zellenöffnung 38 auf, die durch einen Verschlußstopfen 36 verschlossen ist. In einer weiteren Öffnung 40 ist eine in die Akkumulatorenzelle 21 hineinragende Hülse 42 angeordnet. Im Bereich der Öffnung 40 ist gehäuseseitig ein nach innen gerichteter Kragen 44 ausgebildet, der mit einem in einer Ringnut 48 der Hülse 42 angeordneten O-Ring 46 eine Dichtung bildet. Die Hülse 42 erstreckt sich vom Bereich der Öffnung 40 bis in den Elektrolyten 10. Das in den Elektrolyten 10 hineinragende Ende der Hülse 42 ist verschlossen. Zentrisch zur Achse der Hülse 42 weist der Boden 52 eine Öffnung 50 auf, durch die eine Antriebswelle 54 für eine Kreiselpumpe 16 ragt. An ihrem oberen Ende ist die Antriebswelle 54 mit einer nicht näher dargestellten Motorwelle des Gleichstrommotors 20 verbunden. Aus Wartungsgründen ist der Gleichstrommotor 20 hier bürstenlos ausgebildet. Im Bereich des Durchgangs der Antriebswelle 54 durch den Boden 52 ist in der Hülse 42 ein weiterer O-Ring 56 vorgesehen. Dieser dient neben einer Funktion als Dichtung zugleich als Lagerung für die Antriebswelle 54. Am dem Motor 20 gegenüberliegenden Ende der Hülse 42 ist ein Pumpengehäuse 58 befestigt. Dieses weist seitlich unterhalb des Bodens 52 eine Ansaugöffnung 26 auf. Am dem Motor 20 gegenüberliegenden Ende der Antriebswelle 54 sind unterhalb der Öffnung 26 Flügel 60 befestigt. Bei Rotation der Welle 54 wird durch die rotierenden Flügel 60 der über die Ansaugöffnung 26 angesaugte Elektrolyt 10 in Richtung Austrittsöffnung 28 des Pumpengehäuses 58 beschleunigt.

Das Pumpengehäuse 58 weist im Bereich der Austrittsöffnung 28 einen Stutzen 62 auf, an dem ein Schlauch 30 befestigt ist. Über den Schlauch 30 wird der beschleunigte Elektrolyt 10 in den unteren Bereich der Zelle 12 gefördert. Durch die hierdurch bewirkte Zirkulation des Elektrolyten 10 wird eine Homogenisierung der Stoffkonzentration innerhalb des Elektrolyten 10 erreicht.

Insbesondere der beim Laden eines Blei-Schwefelsäure-Akkumulators auftretende Dichtegradient des Elektrolyten 10 in Abhängigkeit von der Höhe kann auf diese Weise reduziert werden. So stehen die Elektroden 18 permanent in einem weitgehend homogenen Elektrolyten 10, wodurch eine hohe elektrochemische Wirksamkeit erreicht werden kann. Bei einem mit der elektrischen Anlage eines Kraftfahrzeugs verbundenen Akkumulator wird das Mittel zum Umwälzen bei dem Anlaßvorgang des Motors des Kraftfahrzeugs eingeschaltet.

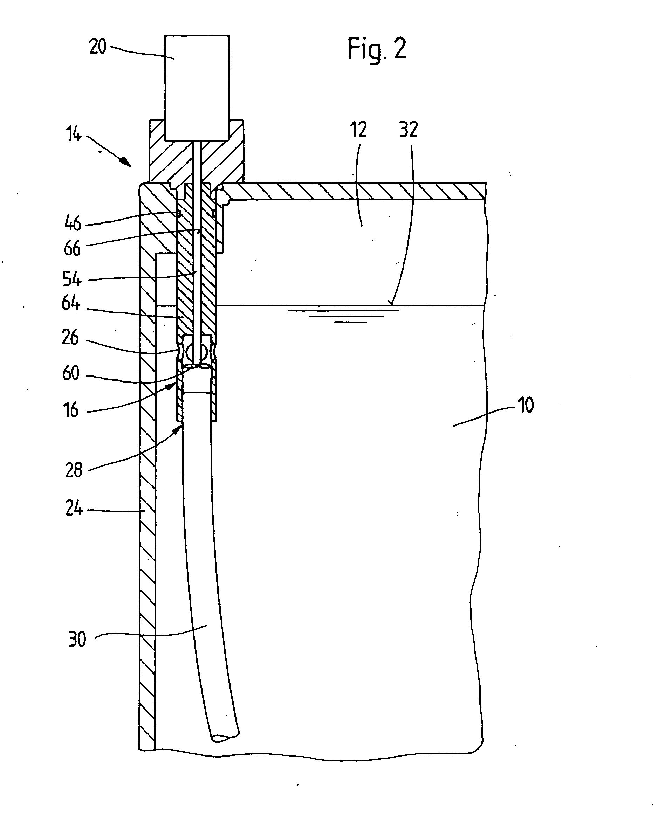

Fig. 2 zeigt eine Abwandlung der Pumpe 16 zu der in Fig. 1 dargestellten Ausgestaltung. In dieser Ausgestaltung bildet eine Hülse 64 zugleich das für die Kreiselpumpe erforderliche Pumpengehäuse. Ferner ist eine Öffnung 66 vorgesehen, durch die die Antriebswelle 54 geführt ist und die zugleich eine Lagerungs- und Abdichtungsfunktion übernimmt. Hinsichtlich der weiteren Funktionen und Merkmale wird auf die Beschreibung zur Ausgestaltung in Fig. 1 verwiesen.

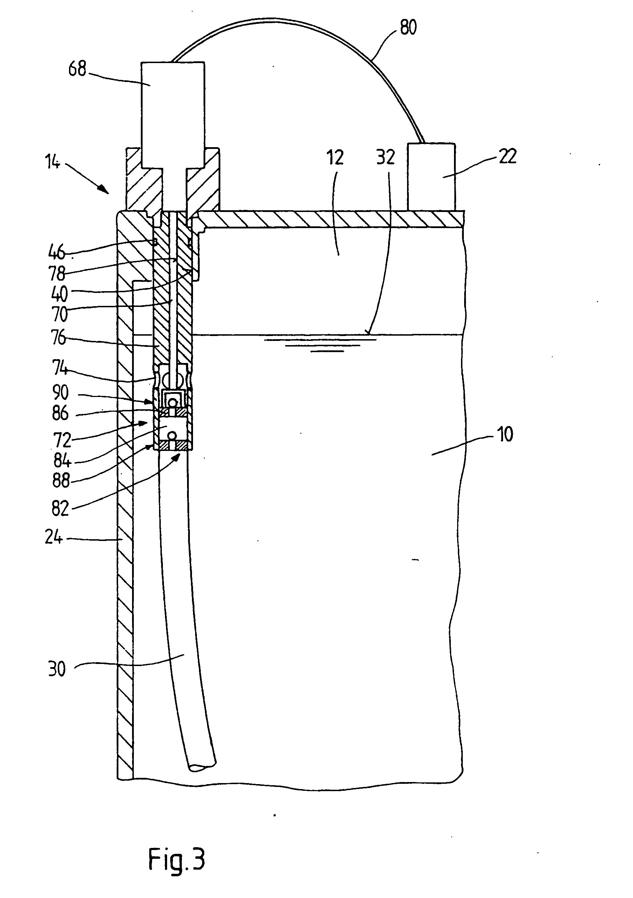

Fig. 3 zeigt eine weitere Ausgestaltung der vorliegenden Erfindung, wobei der Antrieb für das Mittel zum Umwälzen durch einen Hubmagneten 68 gebildet ist, der, wie bei den vorherigen Ausführungsbeispielen, an einer Öffnung 40 des Akkumulatorengehäuses 24 befestigt ist. Von der Öffnung 40 in die Zelle 12 des Akkumulators 14 hineinragend ist eine Hülse 76 angeordnet, die eine zentrische Bohrung 78 aufweist, in der axial verschiebbar ein Hubgestänge 70 angeordnet ist. Das gegenüberliegende Ende der Hülse 76 ragt in den Elektrolyten 10. Das in den Elektrolyten 10 hineinragende Ende der Hülse 76 weist seitlich eine Öffnung 74 zum Austritt des Elektrolyten 10 auf. Über eine Verdrängerpumpe 72 wird der Elektrolyt 10 in einem ersten Arbeitstakt mittels des Schlauchs 30 aus dem unteren Bereich der Akkumulatorzelle 12 angesaugt und in einem zweiten Arbeitstakt über die Austrittsöffnung 74 gefördert. Dazu weist die Verdrängerpumpe 72, die hier als Hubkolbenpumpe ausgebildet ist, einen Pumpenraum 84 auf, in dem ein mit dem Hubgestänge 70 verbundener Kolben 86 axial verschiebbar gelagert ist. Im unteren Bereich des Raumes 84 ist ein Ventil 88 für den Einlaß von Elektrolyten 10 in den Raum 84 vorgesehen. Der Kolben 86 weist ein weiteres Ventil 90 auf, über das der im Raum 84 befindliche Elektrolyt bei einer Abwärtsbewegung des Kolbens 86 aus der Hubkolbenpumpe 72 herausgefördert wird. Über eine nicht näher dargestellte Öffnung dieses Endes des Schlauches 30 wird der Elektrolyt 10 angesaugt. Vorteilhaft kann auch eine Förderung des Elektrolyten 10 erreicht werden, wenn der Pegelstand des Elektrolyten 10 sehr niedrig, insbesondere unterhalb der Austrittsöffnung 74 liegt.

Am Akkumulatorengehäuse 24 ist ferner eine Steuereinheit 22 angeordnet, die über Verbindungsleitungen 80 den Hubmagneten 68 mit Energie versorgt. So kann durch Ausführen mehrerer Hubzyklen eine Förderwirkung erreicht werden, wodurch der Elektrolyt 10 umgewälzt wird. Es kann vorteilhaft eine Gradientenausbildung in der vertikalen Stoffkonzentration reduziert werden. Durch die Steuereinheit 22 wird der Hubmagnet 68 dann angesteuert, wenn ein Ladevorgang des Akkumulators 14 über eine nicht näher dargestellte Kommunikationsverbindung übermittelt wird. Ferner weist die Steuereinheit 22 ein zeitgesteuertes Programm auf, welches ein Umwälzen des Elektrolyten 10 stündlich für jeweils fünf Minuten vorsieht.

Die in den Fign. dargestellten Ausführungsbeispiele dienen lediglich der Erläuterung der Erfindung und sind für diese nicht beschränkend. So können insbesondere der Antrieb und die Art des Mittels zur Umwälzung variieren. Auch können Ausgestaltungen oder Teile daraus im Rahmen dieser Erfindung zu neuen Ausführungen kombiniert werden. Darüber hinaus kann die vorliegende Erfindung auch bei anderen Akkumulatoren bzw. galvanischen Zellen zum Einsatz kommen.

### Bezugszeichenliste

- 10: Elektrolyt
- 12: Zelle
- 14: Akkumulator
- 16: Pumpe
- 18: Elektrode
- 20: Gleichstrommotor
- 22: Steuereinheit
- 24: Gehäuse
- 26: Ansaugöffnung
- 28: Austrittsöffnung
- 30: Schlauch
- 32: Pegel
- 36: Verschlußstopfen
- 38: Zellenöffnung
- 40: Öffnung
- 42: Hülse
- 44: Kragen
- 46: O-Ring
- 48: Ringnut
- 50: Öffnung
- 52: Boden
- 54: Antriebswelle
- 56: O-Ring
- 58: Pumpengehäuse
- 60: Flügel
- 62: Stutzen
- 64: Hülse
- 66: Öffnung
- 68: Hubmagnet
- 70: Hubgestänge
- 72: Verdrängerpumpe
- 74: Austrittsöffnung
- 76: Hülse
- 78: Bohrung
- 80: Verbindungsleitung
- 82: Eintrittsöffnung
- 84: Raum
- 86: Kolben
- 88: Ventil
- 90: Ventil

## Patentansprüche

1. Akkumulator (14) mit einer einen Elektrolyten (10) aufweisenden Zelle (12) sowie zwei in der Zelle (12) angeordneten, mit jeweils wenigstens einem Pol elektrisch verbundenen Elektroden (18), die jeweils zumindest teilweise mit dem Elektrolyten (10) in Kontakt stehen, **dadurch gekennzeichnet, daß** der Akkumulator (14) eine mittels einer Steuereinheit (22) steuerbare Hubkolbenpumpe (72) zum Umwälzen des Elektrolyten (10) aufweist.

2. Akkumulator nach Anspruch 1, **dadurch gekennzeichnet, daß** das Mittel zum die Hubkolbenpumpe (72) in der Zelle (12) angeordnet ist.

3. Akkumulator nach Anspruch 1 oder 2, daß die Hubkolbenpumpe (72) einen mit der Hubkolbenpumpe (72) verbundenen, elektrischen Motor (20, 68) aufweist.

4. Akkumulator nach Anspruch 3, **dadurch gekennzeichnet, daß** der Motor durch einen Hubmagneten (68) gebildet ist.

5. Akkumulator nach einem der Ansprüche 1 bis 4, **dadurch gekennzeichnet, daß** die Steuereinheit (22) mit einem Gehäuse (24) des Akkumulators (14) einstückig ausgebildet ist.

6. Akkumulator nach einem der Ansprüche 1 bis 7, **dadurch gekennzeichnet, daß** die Hubkolbenpumpe (72) mit dem Gehäuse (24) des Akkumulators (14) einstückig ausgebildet ist.

7. Akkumulator nach einem der Ansprüche 1 bis 8, **gekennzeichnet durch** ein Meßelement, mit welchem eine Homogenität der Stoffkonzentration des Elektrolyten (10) ermittelbar ist.

8. Verfahren zum Homogenisieren einer Stoffkonzentration eines Elektrolyten (10) in einer Zelle (12) eines Akkumulators (14) wobei der Elektrolyt (10) umgewälzt wird,_**dadurch gekennzeichnet, daß** ein Mittel (16), zum Umwälzen in Abhängigkeit von einem Betriebszustand einer mit dem Akkumulator (14) verbindbaren elektrischen Anlage gesteuert wird.

9. Verfahren nach Anspruch 8, **dadurch gekennzeichnet, daß** der Elektrolyt (10) über eine in den Elektrolyten (10) ragende Ansaugöffnung (26) angesaugt, durch Mittel (16) zum Umwälzen beschleunigt wird und über eine Austrittsöffnung (28) des Mittels (16) zum Umwälzen in den Elektrolyten (10) austritt.

10. Verfahren nach Anspruch 8 oder 9, **dadurch gekennzeichnet, daß** der Elektrolyt (10) mittels eines Ansaugkanals von einer vorgebbaren Position angesaugt wird.

11. Verfahren nach einem der Ansprüche 8 bis 10, **dadurch gekennzeichnet, daß** der Elektrolyt (10) mittels einem weiteren Kanal (30) an eine vorgebbare Position gefördert wird.

12. Verfahren nach einem der Ansprüche 8 bis 11, **dadurch gekennzeichnet, daß** das Mittel (16) zum Umwälzen bedarfsgerecht gesteuert wird.

13. Verfahren nach Anspruch 12, **dadurch gekennzeichnet, daß** das Mittel (16) zum Umwälzen in Abhängigkeit von einer Strombeanspruchung des Akkumulators (14) gesteuert wird.

14. Verfahren nach einem der Ansprüche 12 oder 13, **dadurch gekennzeichnet, daß** das Mittel (16) zum Umwälzen in Abhängigkeit von vorgebbaren Zeitintervallen gesteuert wird.

15. Verfahren nach einem der Ansprüche 9 bis 15, **dadurch gekennzeichnet, daß** als Elektrolyt (10) Schwefelsäure verwendet wird.

16. Verfahren nach einem der Ansprüche 9 bis 16, **dadurch gekennzeichnet, daß** als Elektroden (18) Bleielektroden verwendet werden.

## Claims

1. A battery (14) with a cell (12) having an electrolyte (10), as well as two electrodes (18) located in the cell (12), with in each case at least one pole electrically connected to the electrode (18), which in each case is at least partially in contact with the electrolyte (10), **characterised in that** the battery (14) has a controllable reciprocating pump (72), controlled by means of a control unit (22), for circulating the electrolyte (10).

2. A battery according to claim 1, **characterised in that** the reciprocating pump (72) is located in the cell (12).

3. A battery according to claims 1 or 2, **characterised in that** the reciprocating pump (72) has an electric motor (20, 68) that is connected with the reciprocating pump (72).

4. A battery according to claim 3, **characterised in that** the motor is formed by a lifting magnet (68).

5. A battery according to one of claims 1 to 4, **characterised in that** the control unit (22) is constructed as one piece with a housing (24) of the battery (14).

6. A battery according to one of claims 1 to 7, **characterised in that** the reciprocating pump (72) is constructed as one piece with the housing (24) of the battery (14).

7. A battery according to one of claims 1 to 8, **characterised by** a measurement element, with which the homogeneity of the substance concentration of the electrolyte can be measured.

8. A process for homogenisation of a substance concentration of an electrolyte (10) in a cell (12) of a battery (14), where the electrolyte (10) is circulated, **characterised in that** a means (16) to circulate is controlled in dependence of an operating state of a device which can be electrically connected to the battery (14).

9. A process according to claim 8, **characterised in that** the electrolyte (10) is aspirated through an intake (26) extending into the electrolyte (10), is accelerated through a means (16) to circulate, and exits the means (16) to circulate through an outlet (28) into the electrolyte (10).

10. A process according to claim 8 or 9, **characterised in that** the electrolyte (10) is aspirated by means of an aspiration channel from a position that can be preset.

11. A process according to claims 8 to 10, **characterised in that** the electrolyte (10) is transported by means of another channel (30) to a position that can be preset.

12. A process according to one of claims 8 to 11, **characterised in that** the means (16) to circulate are controlled as needed.

13. A process according to claim 12, **characterised in that** the means (16) to circulate are controlled depending on a power load of the battery (14).

14. A process according to one of claims 12 to 13, **characterised in that** the means (16) to circulate are controlled in dependence on a time interval which can be preset.

15. A process according to one of claims 9 to 15, **characterised in that** sulphuric acid is used as the electrolyte (10).

16. A process according to one of claims 9 to 16, **characterised in that** lead electrodes are used as the electrodes (18).

## Revendications

1. Accumulateur (14) avec une cellule (12) contenant un électrolyte (10) et deux électrodes (18) disposées dans la cellule (12) et reliées chacune électriquement à au moins un pôle, qui sont chacune au moins partiellement en contact avec l'électrolyte (10), **caractérisé en ce que** l'accumulateur (14) comporte une pompe à piston alternatif (72) pouvant être commandée au moyen d'une unité de commande (22) et destinée à faire circuler l'électrolyte (10).

2. Accumulateur selon la revendication 1, **caractérisé en ce que** la pompe à piston alternatif (72) est disposée dans la cellule (12).

3. Accumulateur selon la revendication 1 ou 2, **caractérisé en ce que** la pompe à piston alternatif (72) possède un moteur électrique (20, 68) relié à la pompe à piston alternatif (72).

4. Accumulateur selon la revendication 3, **caractérisé en ce que** le moteur est formé par un électroaimant de levage (68).

5. Accumulateur selon l'une des revendications 1 à 4, **caractérisé en ce que** l'unité de commande (22) est formée d'un seul tenant avec un boîtier (24) de l'accumulateur (14).

6. Accumulateur selon l'une des revendications 1 à 5, **caractérisé en ce que** la pompe à piston alternatif (72) est formée d'un seul tenant avec le boîtier (24) de l'accumulateur (14).

7. Accumulateur selon l'une des revendications 1 à 6, **caractérisé en ce qu'**il comporte un élément de mesure permettant de déterminer l'homogénéité de la concentration en substance de l'électrolyte (10).

8. Procédé pour homogénéiser une concentration en substance d'un électrolyte (10) dans une cellule (12) d'un accumulateur (14), dans lequel l'électrolyte (10) est mis en circulation, **caractérisé en ce qu'**un moyen (16) de circulation est commandé en fonction d'un état de fonctionnement d'une installation électrique pouvant être reliée à l'accumulateur (14).

9. Procédé selon la revendication 8, **caractérisé en ce que** l'électrolyte (10) est aspiré à travers une ouverture d'aspiration (26) dépassant dans l'électrolyte (10), accéléré par des moyens (16) de circulation, et sort dans l'électrolyte (10) par une ouverture de sortie (28) du moyen (16) de circulation.

10. Procédé selon la revendication 8 ou 9, **caractérisé en ce que** l'électrolyte (10) est aspiré à partir d'une position pouvant être prédéterminée au moyen d'un canal d'aspiration.

11. Procédé selon l'une des revendications 8 à 10, **caractérisé en ce que** l'électrolyte (10) est transporté au moyen d'un autre canal (30) vers une position pouvant être prédéterminée.

12. Procédé selon l'une des revendications 8 à 11, **caractérisé en ce que** le moyen (16) de circulation est commandé en fonction des besoins.

13. Procédé selon la revendication 12, **caractérisé en ce que** le moyen (16) de circulation est commandé en fonction de la demande de courant de l'accumulateur (14).

14. Procédé selon l'une des revendications 12 ou 13, **caractérisé en ce que** le moyen (16) de circulation est commandé en fonction d'intervalles de temps pouvant être prédéterminés.

15. Procédé selon l'une des revendications 9 à 14, **caractérisé en ce que** l'électrolyte (10) utilisé est de l'acide sulfurique.

16. Procédé selon l'une des revendications 9 à 15, **caractérisé en ce que** les électrodes (18) utilisées sont des électrodes en plomb.
